Europäisches Patentamt

European Patent Office

Office européen des brevets

(19)

(11) Numéro de publication: **0 176 462 B1**

(12) # FASCICULE DE BREVET EUROPEEN

(45) Date de publication du fascicule du brevet:
**30.03.88**

(51) Int. Cl.⁴: **A 23 L 1/01,** A 23 L 1/31, A 47 J 27/18

(21) Numéro de dépôt: **85460013.7**

(22) Date de dépôt: **20.08.85**

(54) **Procédé de cuisson de produits alimentaires tels que des jambons et installation le mettant en oeuvre.**

(30) Priorité: **28.08.84 FR 8413405**
**28.08.84 FR 8413406**

(43) Date de publication de la demande:
**02.04.86 Bulletin 86/14**

(45) Mention de la délivrance du brevet:
**30.03.88 Bulletin 88/13**

(84) Etats contractants désignés:
**AT BE CH DE GB IT LI LU NL SE**

(56) Documents cités:
**EP - A - 0 070 228**
**DE - A - 1 492 670**
**FR - A - 2 364 619**
**FR - A - 2 515 933**
**GB - A - 710 866**
**US - A - 3 908 533**

**DIE FLEISCHEREI, no. 5, 1980, pages 478-486; J.E.
REICHERT: "Die Delta-T-Kochung - ein neuer Begriff?"**

(73) Titulaire: **ARMOR-INOX SA, Boîte Postale 16,
F-56430 Mauron (FR)**

(72) Inventeur: **Dreâno, Claude, Route de Perhan,
F-56490 Guillers (FR)**

(74) Mandataire: **Le Guen, Louis François, Cabinet Louis Le
Guen 1, avenue Edouard VII B.P. 91, F-35802 Dinard
Cédex (FR)**

# Description

La présente invention concerne un procédé et une installation de cuisson ou de refroidissement de produits alimentaires, tels que notamment les jambons. Dans la suite, on considérera que la cuisson comprend d'abord l'opération de cuisson proprement dite, puis l'opération de refroidissement permettant de ramener les produits cuits à la température ordinaire ou à une température de conservation.

Dans la description qui va suivre, on considérera plus particulièrement la cuisson et le refroidissement de jambons, mais il faut bien comprendre que le procédé de l'invention peut avoir d'autres applications, en particulier en salaisonnerie.

Dans la demande de brevet européen 0 070 228, on a décrit un procédé de cuisson de jambons par transfert de chaleur par convection et conduction entre un fluide caloporteur, d'une part, et les jambons et leurs supports, d'autre part, dans lequel on distingue plusieurs phases successives:

— une première phase d'une durée de 45 minutes environ, pendant laquelle le fluide caloporteur est mis en contact avec les jambons et leurs supports, la température du liquide caloporteur étant de l'ordre de 83°C,

— une seconde phase d'une durée de l'ordre de 4 heures, pendant laquelle le liquide caloporteur est retiré,

— une troisième phase identique à la première, mais d'une durée de l'ordre de 30 minutes,

— une quatrième phase identique à la seconde, mais d'une durée de 2,5 heures environ,

— une cinquième phase identique à la troisième, et

— une sixième phase semblable à la quatrième, à la fin de laquelle une température à coeur de 65° à 68°C est atteinte, c'est-à-dire à la fin de laquelle les jambons sont cuits.

Dans la demande de brevet européen EP-A-0 070 228, on a également décrit une installation de cuisson comportant une centrale de chauffe de liquide caloporteur et une pluralité d'enceintes thermiquement isolées contenant des empilages de moules à jambon pleins ou de couches de jambons enveloppés séparées par des clayettes. Un réseau de conduites est prévu entre la centrale de chauffe et les enceintes, avec des vannes et des pompes permettant de remplir sélectivement une enceinte à partir de la centrale de chauffe ou de la vider vers la même centrale. Cette installation est particulièrement utile quand elle sert à mettre en oeuvre le procédé de cuisson décrit plus haut.

Les expériences de cuisson suivant le procédé de la demande de brevet européen précitée ont montré que 65% des calories nécessaires à la cuisson étaient apportées durant la première phase.

Par ailleurs, il a été décrit dans l'article technique allemand intitulé «Die Delta-T-Kochung – ein neuer Begriff» par J.E. Reichert et paru dans la revue «Die Fleischerei», 1980, n° 5, un procédé de cuisson différentielle dans lequel la température du milieu ambiant de cuisson est de 25°C, par exemple, supérieure à la température mesurée à coeur, cette température s'élévant jusqu'à une température finale de 70°C. Ce procédé permet notamment d'éviter les dommages occasionnés par une cuisson à température constante entre 65°C et 70°C.

Enfin, l'expérience montre que quand la température ambiante a dépassé 50°C, il est préférable de ne plus la laisser descendre au-dessous de cette valeur avant la cuisson complète, car certains germes peuvent alors se développer rapidement entraînant une dégradation de la qualité du jambon.

Selon la présente invention, il est prévu un procédé de cuisson différent de celui qui a été mentionné ci-dessus, en ce qu'à la suite des deux premières phases, est prévue une phase de cuisson différentielle, c'est-à-dire une phase au cours de laquelle la différence entre la température du fluide caloporteur baignant les jambons et la température à coeur des jambons est constante.

Un objet de la présente invention consiste donc à prévoir un procédé de cuisson qui allie les avantages du procédé décrit dans la demande de brevet européen précitée et de la cuisson différentielle.

L'installation décrite dans la demande de brevet européen précitée permet évidemment de mettre en oeuvre ce procédé. Toutefois, son réseau de conduites est relativement complexe, ainsi que la commande des nombreuses vannes et pompes installées sur ce réseau.

C'est pourquoi un autre objet de l'invention consiste à prévoir une installation plus simple, qui permette, en outre, un fonctionnement quasi-continu.

Suivant une caractéristique de l'invention, il est prévu un procédé de cuisson de jambons dans lequel on distingue les phases suivantes:

— une première phase d'une durée de 45 minutes environ, pendant laquelle un liquide caloporteur est mis en contact avec les jambons et leurs supports, la température du liquide caloporteur étant de l'ordre de 83°C,

— une seconde phase pendant laquelle le liquide caloporteur est retiré et qui dure jusqu'à ce que la température ambiante atteigne une valeur minimale prédéterminée,

— une troisième phase pendant laquelle un fluide caloporteur, liquide ou vapeur, est mis en contact avec les jambons et leurs supports, la température ambiante étant maintenue constante à ladite valeur minimale prédéterminée,

— une quatrième phase pendant laquelle ledit fluide caloporteur est laissé en contact avec les jambons et leurs supports, la différence entre la température ambiante et la température à coeur étant maintenue constante, égale à une valeur différentielle prédéterminée, et

— une cinquième phase pendant laquelle la température ambiante est maintenue constante entre 70°C et 75°C, une fois cette température atteinte au cours de la quatrième phase, la cinquième phase se terminant quand la température à coeur atteint la valeur désirée, soit 65°C à 68°C.

Suivant une autre caractéristique, ledit fluide caloporteur est de la vapeur d'eau.

Suivant une autre caractéristique, ladite valeur minimale prédéterminée est de 55°C.

Suivant une autre caractéristique, ladite valeur différentielle prédéterminée est choisie dans une plage allant de 5°C à 20°C environ.

Suivant une autre caractéristique, il est prévu une installation de cuisson comportant une centrale de chauffe de liquide caloporteur, un tunnel thermiquement isolé qui est partagé en une série de compartiments séparés les uns des autres (et pour le premier et le dernier, de l'extérieur) par des portes, une pluralité de conteneurs de cuisson chargeables en empilages de jambons et déplaçables par un système de transport traversant la série de compartiments, le premier compartiment comportant un bassin de trempage relié à la centrale de chauffe dans lequel chaque conteneur entrant est trempé, le second compartiment étant vide de fluide caloporteur et les compartiments suivants comportant sur leurs planchers des bacs de liquide pourvus de moyens de chauffage, les températures assurées par les moyens de chauffage dans les bacs de liquide croissant parallèlement à la température à coeur des jambons.

Suivant une autre caractéristique, le système de transport est une rail sur lequel roulent des chariots auxquels sont suspendus les conteneurs de cuisson.

Suivant une autre caractéristique, le bassin de trempage est mobile verticalement pour, en position haute, submerger un conteneur et, en position basse, permettre l'avancement des conteneurs.

Suivant une autre caractéristique, le bassin de trempage est fixe et la suspension de chaque conteneur est de longueur variable commandable pour, en position allongée, descendre le conteneur dans le bassin de trempage et, en position courte, assurer le déplacement du conteneur.

Suivant une autre caractéristique, les conteneurs sont perforés.

Suivant une autre caractéristique, chaque conteneur est un parallélépipède perforé sur toutes ses faces sauf la face avant ou la face arrière.

Suivant une autre caractéristique, les portes du tunnel sont du genre portes-rideaux souples.

Suivant une autre caractéristique, le niveau du liquide dans chaque bac est au-dessous des fonds des conteneurs.

Les caractéristiques de l'invention mentionnées ci-dessus, ainsi que d'autres, apparaîtront plus clairement à la lecture de la description suivante de divers procédés de cuisson et d'un exemple de réalisation de l'installation, ladite description étant faite en relation avec les dessins joints, parmi lesquels:

la Fig. 1 est un diagramme température-temps illustrant le procédé de cuisson connu suivant la demande de brevet européen 0 070 228,

la Fig. 2 est un diagramme température-temps illustrant un procédé de cuisson différentielle ou en «delta T» connu,

la Fig. 3 est un diagramme température-temps illustrant le procédé de cuisson suivant l'invention,

la Fig. 4 est une vue schématique en coupe verticale d'une installation suivant l'invention, et

la Fig. 5 est une vue schématique en perspective d'un exemple préféré de réalisation d'un conteneur utilisé dans l'installation de la Fig. 2.

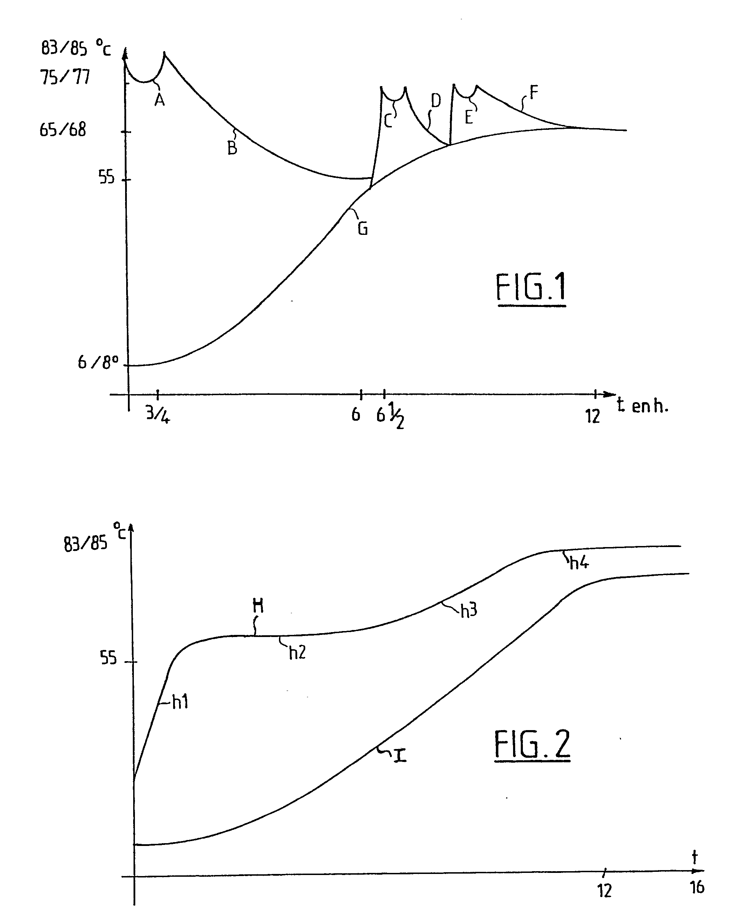

Dans les Figs. 1 à 3, on a porté en abscisse les temps en heures et fractions d'heure, et en ordonnée les températures en °C.

A la Fig. 1 qui concerne le procédé de cuisson de la demande de brevet européen 0 070 228, la courbe A illustre la variation de la température du liquide pendant la première phase de cuisson pendant laquelle de l'eau est admise dans l'enceinte de cuisson avec circulation continue du liquide entre cette enceinte et une enceinte tampon chauffée. On notera que, dans un premier temps, la température chute à cause du premier contact avec les jambons et leurs supports froids, puis remonte du fait de la circulation continue du liquide. La température moyenne du liquide oscille entre 85°C et 83°C. La durée de cette première phase est d'environ 3/4 d'heure.

La courbe B illustre la chute de la température ambiante dans l'enceinte de cuisson une fois le liquide de la phase 1 entièrement retiré. Cette seconde phase doit se terminer quand la température ambiante atteint environ 55°C, température au-dessous de laquelle la multiplication de certains germes augmente considérablement.

La courbe C illustre la variation de la température du liquide qui est réadmis dans l'enceinte de cuisson, dans des conditions identiques à celles de la courbe A, mais à une température moyenne un peu plus faible de 80°C à 78°C. La durée de cette troisième phase est d'environ 1/2 heure.

La courbe D illustre la chute de la température, une fois le liquide retiré dans une quatrième phase, cette chute ayant la même allure que dans la seconde phase, mais étant arrêtée avant que la température ambiante ne tombe au-dessous de la température à coeur.

La courbe E illustre une cinquième phase analogue à la troisième et la courbe F une sixième phase analogue à la quatrième.

La courbe G illustre la croissance de la température à coeur des jambons pèndant les six phases jusqu'à ce que cette température atteigne de 65°C à 68°C, température à laquelle le jambon est considéré comme cuit. On observera que la courbe G a une allure en S.

Les mesures effectuées en cours de cuisson suivant le procédé de la Fig. 1 ont montré qu'au cours de la première phase, 65% des calories nécessaires à la cuisson étaient déjà apportées.

A la Fig. 2 qui concerne un procédé de cuisson différentielle, la courbe H illustre la croissance de la température ambiante et la courbe I la croissance de la température à coeur. Dans la courbe H, on distingue une première partie $h_1$ de croissance rapide pour atteindre une température légèrement supérieure à 55°C, une seconde partie plate $h_2$, une troisième partie $h_3$ croissante, parallèle à la variation de la température à coeur, et une quatrième partie $h_4$ plate qui se termine quand le jambon est cuit. La courbe I a la même allure en forme de S que la courbe G de la Fig. 1.

Etant donné que, le long des courbes $h_1$ et $h_2$, la température ambiante est inférieure ou simplement égale à 55°C, le temps écoulé pour que la courbe I atteigne cette température est beaucoup plus long que dans le cas de la Fig. 1.

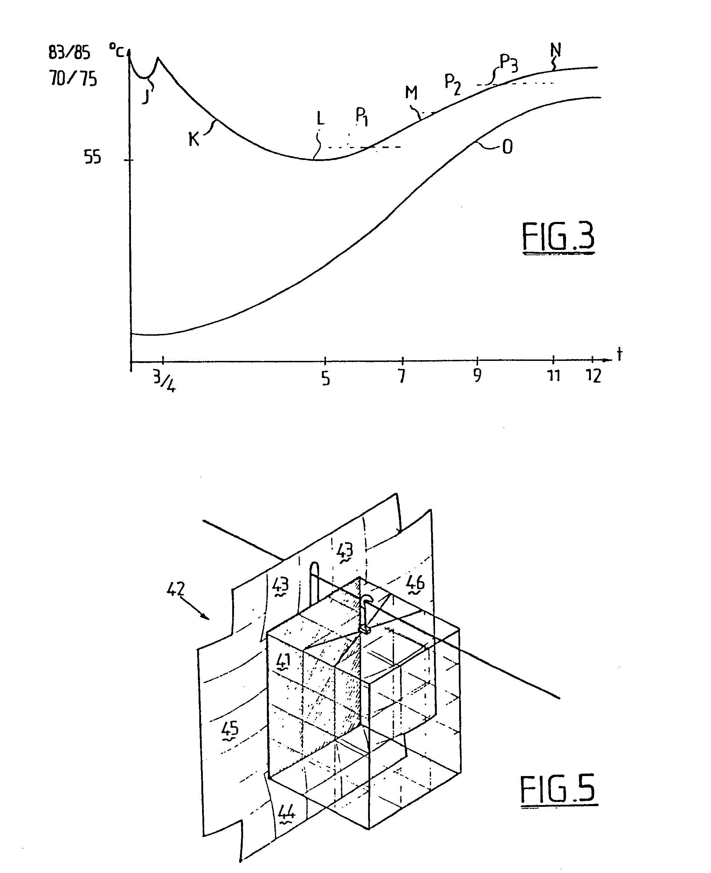

A la Fig. 3 qui concerne le procédé de cuisson suivant l'invention, la courbe J illustre la variation de la température du fluide caloporteur pendant la première phase de cuisson qui est identique à celle qui correspond à la courbe A de la Fig. 1.

La courbe K illustre la chute de la température ambiante comme la courbe B de la Fig. 1.

La courbe L illustre une phase à température ambiante similaire à la phase correspondant à la courbe $h_2$ de la Fig. 2.

La courbe M illustre la croissance de la température ambiante pendant la phase de cuisson différentielle, comme la courbe $h_3$ de la Fig. 2.

La courbe N illustre la dernière phase à température ambiante maximale, comme la courbe $h_4$ de la Fig. 2.

La courbe O illustre la croissance de la température à coeur.

Les avantages du procédé de l'invention illustré à la Fig. 3 par rapport à celui qui est illustré à la Fig. 1 tiennent essentiellement au nombre réduit d'opération de remplissage et de vidage. Ce nombre, élevé dans le procédé de la Fig. 1, conduisait à multiplier les vannes et les opérations de commutation de vannes qui ne pouvaient être maîtrisées qu'en utilisant un matériel de commande compliqué, donc cher.

Par rapport au procédé illustré à la Fig. 2, l'avantage principal est la réduction du temps de cuisson.

Après la cuisson, on peut refroidir les jambons cuits en les immergeant dans une cuve contenant de l'eau dont la température proche de 0° est entretenue par circulation pendant 3/4 d'heure. L'eau est ensuite retirée de la cuve et la température à coeur continue à descendre pendant par exemple 4 à 5 heures. A la fin de cette phase de refroidissement, qui est symétrique de la phase J, K de la Fig. 3, 65% des frigories nécessaires au refroidissement sont apportées. Le refroidissement peut ensuite se poursuivre par exemple d'une manière naturelle dans une enceinte relativement froide.

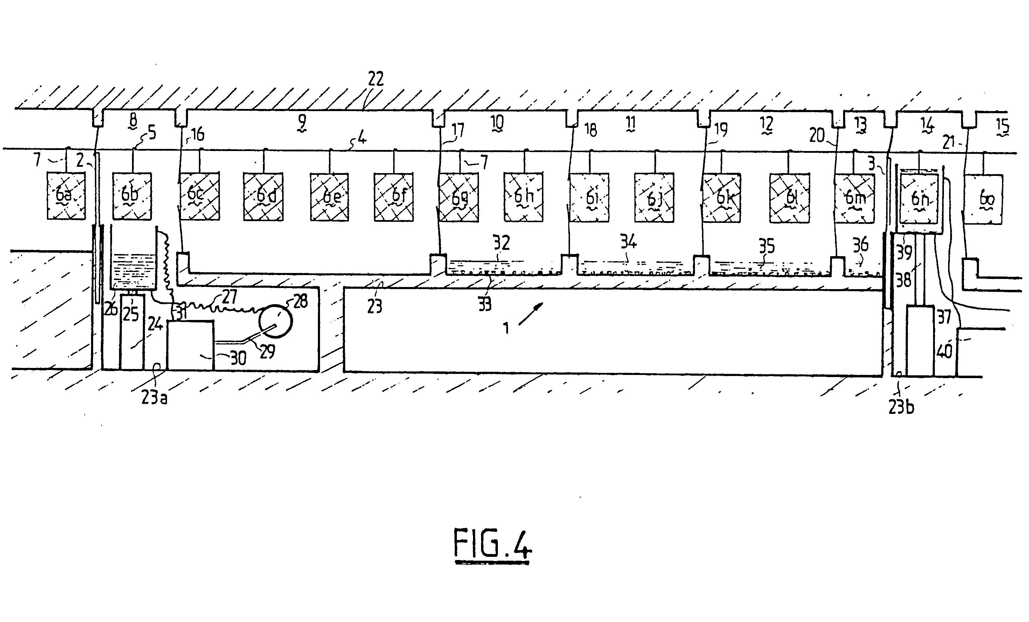

L'installation de la Fig. 4 est prévue pour réaliser la cuisson selon le procédé de l'invention, ainsi que pour amorcer le refroidissement des produits cuits.

L'installation de la Fig. 4 comprend un tunnel de cuisson 1 pourvu d'une porte d'entrée 2 et d'une porte de sortie 3. Un rail de transport 4 passe à travers le tunnel 1. Sur le rail 4, peuvent rouler des chariots 5 sous lesquels pendent des conteneurs 6a à 6o qui sont remplis de moules à jambon pleins. Ils sont de préférence à claire-voie, au moins partiellement, c'est-à-dire qu'ils sont non étanches aux fluides. Avant d'entrer dans le tunnel 1, chaque conteneur, comme 6a, est suspendu à un chariot 5 par une suspension 7. Pour faire avancer les conteneurs sous le rail 4, on suppose que les suspensions 7 sont reliées par un lien à un câble moteur, non montré, disposé sous le rail 4.

Le tunnel 1 est divisé en huit compartiments 8 à 15 qui sont respectivement séparés par des portes 16 à 21.

D'une manière générale, le tunnel 1 est limité par un plafond 22, un plancher 23 et des parois latérales, non visibles à la Fig. 2.

Dans le premier compartiment 8, le niveau du plancher 23a est plus bas que la partie centrale du plancher 23. Sur le plancher 23a est monté un vérin vertical 24 dont la tige 25 supporte un bassin d'immersion 26, ouvert vers le haut. Le bassin 26 a une entrée de liquide qui est reliée par une canalisation souple 27 à la sortie d'une pompe 28. L'entrée de la pompe 28 est reliée par une canalisation 29 à une centrale de chauffe 30. Le bassin 26 a encore une sortie de débordement qui est reliée par une canalisation souple 31 à une entrée de la centrale de chauffe 30.

Le second compartiment 9 est une simple salle étanche et isolée thermiquement.

Dans le fond du troisième compartiment 10 est prévu un bac 32 contenant de l'eau sur une hauteur de 10 à 20 cm. Dans le bac 32 sont prévues des cannes chauffantes 33 qui sont, par exemple, des résistances électriques. D'une manière analogue, dans les fonds des compartiments 11 à 13, sont prévus des bacs 34 à 36 contenant de l'eau chauffée par des cannes chauffantes analogues aux cannes 33. En pratique, dans chaque compartiment 10 à 13, règne une atmosphère de vapeur d'eau dont la température est réglée en fonction de la chaleur apportée par les cannes telles que 33.

Les compartiments 8 à 13 forment la partie du tunnel dans laquelle s'effectue la cuisson proprement dite. C'est pourquoi on a dénommé plus haut les portes 2 et 3, dont l'une ferme l'avant du compartiment 8 et l'autre l'arrière du compartiment 13, porte d'entrée et porte de sortie. Dans le compartiment 14, au-delà de la porte 3, le niveau du plancher 23b est au même niveau que le plancher 23a. Sur le plancher 23b est monté un vérin vertical 37 dont la tige 38 supporte un bassin d'immersion 39, ouvert vers le haut. Le bassin 39 est relié à une centrale d'eau froide 40 par une pompe, non montrée, et des canalisations analogues à celles qui relient 26 et 30.

Le compartiment 15 peut être un compartiment isolé comme le compartiment 9, mais ce n'est pas obligatoire.

Les conteneurs 6a à 6o sont équidistants sur le rail 4 et avancent d'un pas toutes les heures, chaque déplacement s'effectuant dans un temps court de l'ordre de 1 à 2 minutes. On en déduit que les temps de séjour dans les compartiments 8 à 14 sont respectivement de 1 h, 4 h, 2 h, 2 h, 2 h, 1 h et 1 h.

Les portes 2 et 3 sont, de préférence, des portes coulissantes dont le bord supérieur est en position basse au-dessous du fond des conteneurs et en position haute juste au-dessous du rail 4. Elles sont complétées l'une et l'autre, pour la partie existant entre le plafond 22 et le rail 4, par des bavettes. Les portes 2 et 3 et les bavettes associées limitent la partie chaude du tunnel 1 et sont donc en un matériau ayant un très bon coefficient d'isolation thermique.

Les portes 16 à 21 peuvent être constituées chacune de bavettes supérieure, inférieure et latérales. On décrira plus en détail une telle porte, en relation avec la Fig. 5. Par ailleurs, ces portes séparant des compartiments dont les différences de températures sont relativement faibles, elles peuvent être en matériau isolant relativement courant.

Dans le compartiment 8, le bassin 26 contient de l'eau ou mieux, du bouillon de cuisson à 83°C environ. A la Fig. 4, le bassin 26 est montré en position basse. En pratique, dès que le conteneur 6b est en place, le vérin 24 élève le bassin 26 jusqu'à ce que le conteneur y soit totalement immergé. En position basse, l'eau qui subsiste dans 26 est juste suffisante pour recouvrir le conteneur. Dès l'immersion, la pompe 28 est mise en fonctionnement pour amener de l'eau à 83°C provenant de la centrale de chauffe 30. L'eau déborde dans 26 et revient à la centrale 30 par 31. En pratique, des vannes supplémentaires sont prévues par exemple pour permettre la vidange du bassin 26. Au bout d'un temps égal à 3/4 h environ, la pompe 28 est arrêtée et le vérin 24 descend le bassin 26. Pendant le 1/4 h qui suit, avant le passage dans le compartiment 9, les jambons contenus dans 6b, continuent à cuire par inertie thermique. On pourrait également ne commander la montée du bassin 26 qu'un 1/4 h après l'entrée du conteneur 6b dans 8. En conclusion, dans le compartiment 8, les jambons subissent la cuisson correspondant à la partie J de la courbe de température externe de la Fig. 3.

Les conteneurs 6c à 6f passent 4 h dans le compartiment 9 où leurs températures externes, ainsi que celles de leurs supports décrivent la partie de courbe K de la Fig. 3.

Dans le compartiment 10, la température externe des jambons et de leurs supports est ajustée au-dessus de 55°C en contrôlant la température de l'eau du bac 32 par l'apport de chaleur des cannes 33.

Dans les compartiments 11 et 12, la température ambiante est remontée par paliers de manière à assurer une cuisson en Delta-T par rapport à la température à coeur. Les températures des paliers sont contrôlées par celles des cannes dans les bacs 34 et 35. En pratique, l'installation permet d'approximer les parties de courbe L et M de la Fig. 3 au moyen de trois paliers P1, P2 et P3 qui assurent avec suffisamment de précision une cuisson en Delta-T. Il faut comprendre que, si l'on désire une meilleure précision, on peut subdiviser les compartiments 10 à 12 en six compartiments. On peut également faire varier les températures au moyen des réglages des cannes.

Dans le compartiment 13, la température externe des jambons et de leurs supports suit la partie N de la courbe de la Fig. 3. La température du bac 36 peut varier pour suivre exactement cette courbe ou encore être constante pour l'approximer. A la sortie du compartiment 13, la température à coeur des jambons a atteint 65°C, soit la température de cuisson complète. En pratique, au cours du passage dans le tunnel 1, la température à coeur a suivi la courbe O de la Fig. 3.

Dans le compartiment 14, le bassin 39 contient de l'eau à 2°C environ. Dès que le conteneur 6n est en place, le vérin 37 élève le bassin 39, qui avait été abaissé pour l'entrée du conteneur. On retrouve un fonctionnement semblable à celui qui a été décrit à propos du traitement dans le compartiment 8, mais ici la centrale de froid 40 est à 2°C et l'immersion peut durer 1 h. Les conteneurs 6 peuvent, à la sortie de 14, être stockés. La température à coeur évolue alors symétriquement par rapport au début de la courbe O, Fig. 3, c'est-à-dire qu'au bout de 5 h, elle sera d'environ 30°C ou 25°C. Les jambons peuvent alors être mis en chambre froide classique où ils seront conservés.

Evidemment, entre le compartiment 13 et le compartiment 14, on peut également prévoir un compartiment de stockage ou compartiment tampon. Toutefois, il faut bien comprendre qu'après avoir réussi à réduire le temps de cuisson à 10 h environ en utilisant le procédé de cuisson illustré à la Fig. 3, le refroidissement doit être également effectué le plus rapidement possible pour réduire les dimensions des zones de stockage. L'installation de la Fig. 4 répond à cette exigence.

A la Fig. 5, on a montré un exemple préféré de conteneur 6, c'est-à-dire d'un des conteneurs 6a à 6o. Le conteneur 6 est un parallélépipède dont la face verticale arrière est pleine tandis que les cinq autres faces sont à claire-voie. Quand le conteneur est à l'arrêt dans le tunnel 1, sauf dans 8 ou 14, la face verticale arrière pleine 41 coopère avec la cloison souple 42, c'est-à-dire l'une des cloisons 16 à 21, pour réaliser l'étanchéité d'un compartiment à l'autre. A cet effet, la cloison souple 42 est formée de lamelles souples verticales 43, dirigées vers le bas, et 44, dirigées vers le haut, et de lamelles horizontales 45, dirigées vers la gauche, et 46, dirigées vers la droite. Chaque lamelle a une extrémité fixée au cadre de l'ouverture séparant deux compartiments et une extrémité libre dirigée vers l'intérieur de cette ouverture. Les extrémités libres des lamelles 43 à 46 délimitent un rectangle dont les dimensions sont légèrement inférieurs à celles de la face pleine 41 du conteneur. Ainsi, au cours du déplacement du conteneur 6, sur le rail 4, dans le sens de la flèche F, le conteneur 6 passe à travers ledit rectangle en écartant les lamelles 43 à 46. Le conteneur dépasse la cloison d'une certaine distance de manière que toutes les lamelles aient repris leurs positions initiales. Puis le conteneur est ramené légèrement en arrière pour s'appliquer contre les lamelles, sans les écarter, comme le montre la Fig. 5. Une étanchéité est alors obtenue.

L'intérêt de prévoir la face arrière pleine tient au fait que la longueur des lamelles peut être réduite par rapport à celle qui serait nécessaire avec une face 41 à claire-voie. Certaines des lamelles de grande longueur risqueraient de rester accrochées au conteneur après son passage, ce qui détruirait l'étanchéité entre les compartiments adjacents. Cet inconvénient est éliminé avec la face pleine 41 et les lamelles courtes de l'exemple de la Fig. 5. Il faut noter que le dessin de la Fig. 4 illustre le cas d'utilisation du conteneur et de la porte souple de la Fig. 5.

Bien entendu, au lieu de la face arrière, on peut prévoir que la face avant du conteneur est pleine.

Le tunnel de la Fig. 4 est représenté linéaire, mais peut avoir en plan une forme quelconque, par exemple droite ou en fer à cheval. Par ailleurs, entre la centrale de chauffe 30 et la centrale de froid 40, on peut prévoir une pompe à chaleur qui permettrait de réduire l'énergie consommée.

**Revendications**

1. Procédé de cuisson de produits alimentaires, tels que des jambons, caractérisé en ce qu'il comprend les phases suivantes:
— une première phase d'une durée de 45 minutes environ, pendant laquelle un liquide caloporteur est mis en contact avec les jambons et leurs supports, la température du liquide caloporteur étant de l'ordre de 83°C,

— une seconde phase pendant laquelle le liquide caloporteur est retiré et qui dure jusqu'à ce que la température ambiante atteigne une valeur minimale prédéterminée,

— une troisième phase pendant laquelle un fluide caloporteur, liquide ou vapeur, est mis en contact avec les jambons et leurs supports, la température ambiante étant maintenue constante à ladite valeur minimale prédéterminée,

— une quatrième phase pendant laquelle ledit fluide caloporteur est laissé en contact avec les jambons et leurs supports, la différence entre la température ambiante et la température à coeur étant maintenue constante, égale à une valeur différentielle prédéterminée, et

— une cinquième phase pendant laquelle la température ambiante est maintenue constante entre 70°C et 75°C, une fois cette température atteinte au cours de la quatrième phase, la cinquième phase se terminant quand la température à coeur atteint la valeur désirée, soit 65°C à 68°C.

2. Peocédé suivant la revendication 1, caractérisé en ce que ledit fluide caloporteur est de la vapeur d'eau.

3. Procédé suivant la revendication 1 ou 2, caractérisé en ce que ladite valeur minimale prédéterminée est de 55°C.

4. Procédé suivant l'une des revendications 1 à 3, caractérisé en ce que ladite valeur différentielle prédéterminée est choisie dans une plage allant de 5°C à 20°C environ.

5. Installation pour mettre en oeuvre le procédé de cuisson suivant l'une des revendications 1 à 4, caractérisée en ce qu'elle comporte une centrale de chauffe de liquide caloporteur (30), un tunnel (1) thermiquement isolé qui est partagé en une série de compartiments (8 à 13) séparés les uns des autres (et pour le premier et le dernier, de l'extérieur) par des portes (2, 3, 16 à 20), une pluralité de conteneurs de cuisson (6) chargeables en empilages de jambons et déplaçables par un système de transport traversant la série de compartiments, le premier compartiment (8) comportant un bassin de trempage (26) relié à la centrale de chauffe (30) dans lequel chaque conteneur entrant est trempé, le second compartiment (9) étant vide de fluide caloporteur et les compartiments suivants (10 à 13) comportant sur leurs planchers (23) des bacs de liquide (32, 34 à 36) pourvus de moyens de chauffage (33), les températures assurées par les moyens de chauffage dans les bacs de liquide croissant parallèlement à la température à coeur des jambons.

6. Installation suivant la revendication 5, caractérisée en ce que le système de transport est un rail (4) sur lequel roulent des chariots (5) auxquels sont suspendus les conteneurs de cuisson (6).

7. Installation suivant la revendication 5 ou 6, caractérisée en ce que le bassin de trempage (26) est mobile verticalement pour, en position haute, submerger un conteneur (6) et, en position basse, permettre l'avancement des conteneurs (6).

8. Installation suivant la revendication 5 ou 6, caractérisée en ce que le bassin de trempage (26) est fixe et la suspension de chaque conteneur (6) est de longueur variable commandable pour, en position allongée, descendre le conteneur (6) dans le bassin de trempage (26) et, en position courte, assurer le déplacement du conteneur (6).

9. Installation suivant l'une des revendications 5 à 8, caractérisée en ce que les conteneurs (6) sont perforés.

10. Installation suivant l'une des revendications 5 à 9, caractérisée en ce que chaque conteneur (6) est un parallélépipède perforé sur toutes ses faces sauf la face avant ou la face arrière.

11. Installation suivant l'une des revendications 5 à 10, caractérisée en ce que les portes du tunnel (16 à 20) sont du genre porte-rideaux souples.

12. Installation suivant l'une des revendications 5 à 11, caractérisée en ce que le niveau du liquide dans chaque bac (32, 34 à 36) est au-dessous des fonds des conteneurs.

13. Installation suivant l'une des revendications 5 à 12, caractérisée en ce que le tunnel de cuisson (1) est suivi d'une installation de refroidissement comportant une centrale de froid (40) et un premier compartiment (14) pourvu d'un bassin de trempage (39) relié à la centrale de froid (40) dans lequel chaque conteneur (6) sortant du tunnel de cuisson est trempé.

**Patentansprüche**

1. Verfahren zum Kochen von Nahrungsmitteln, z.B. Schinken, gekennzeichnet durch folgende Verfahrensschritte:

— ein erster Schritt, der etwa 45 Minuten dauert, während welchem eine Wärme übertragende Flüssigkeit in Kontakt mit dem Schinken und dessen Schüsseln gebracht wird, wobei die Temperatur der Wärme übertragenden Flüssigkeit in der Grössenordnung von 83°C liegt,

— einen zweiten Schritt, während welchem die Wärme übertragende Flüssigkeit weggenommen wird und der andauert bis die Umgebungstemperatur einen vorgegebenen Mindestwert erreicht hat,

— einen dritten Schritt, während welchem die Wärme transportierende Flüssigkeit oder Dampf in Kontakt mit den Schinken und ihren Schüsseln gebracht wird, wobei die Umgebungstemperatur auf diesem vorgegebenen Mindestwert konstant gehalten wird,

— einen vierten Schritt, während welchem die Wärme transportierende Flüssigkeit mit den Schinken und ihren Schüsseln in Kontakt bleibt, wobei die Differenz zwischen der Umgebungstemperatur und der Kerntemperatur konstant gleich einem vorgegebenen Differenzwert gehalten wird, und

— einem fünften Schritt, während welchem die Umgebungstemperatur konstant zwischen 70°C und 75°C gehalten wird, sobald diese Temperatur während des vierten Schrittes erreicht worden ist, wobei der fünfte Schritt endigt, wenn die Kerntemperatur den gewünschten Wert, d.h. 65°C bis 68°C erreicht hat.

2. Verfahren nach Anspruch 1, dadurch gekennzeichnet, dass die Wärme transportierende Flüssigkeit Wasserdampf ist.

3. Verfahren nach Anspruch 1 oder 2, dadurch gekennzeichnet, dass dieser vorgegebene Mindestwert 55°C ist.

4. Verfahren nach einem der Ansprüche 1-3, dadurch gekennzeichnet, dass dieser vorgegebene Differenzwert innerhalb eines Bereiches von etwa 5°C bis 20°C gewählt wird.

5. Vorrichtung zur Durchführung des Verfahrens nach einem der Ansprüche 1-4, gekennzeichnet durch eine Heizeinrichtung (30) für die Wärme transportierende Flüssigkeit, eine thermisch isolierte Leitung (1), die in eine Anzahl Abteilungen (8-13) unterteilt ist, die voneinander (und für die erste und die letzte nach aussen) durch Tore (2, 3, 16, 20) getrennt sind, eine Anzahl von Kochbehältern (6), in welche Stapel von Schinken eingebracht werden können und die durch ein Transportsystem bewegt werden, das durch die Reihe der Abteile führt, ferner dass das erste Abteil (8) einen Tauchbehälter (26) aufweist, der mit der Heizeinrichtung (30) verbunden ist, in welchem jeder eintretende Behälter (6) eingetaucht wird, dass das zweite Abteil (9) keine Wärme transportierende Flüssigkeit enthält und die nachfolgenden Abteile (10-13) auf ihren Böden (3) Flüssigkeitswannen (32, 34 bis 36) haben, die mit Heizeinrichtungen (33) versehen sind, und dass die durch die Heizeinrichtungen in den Flüssigkeitswannen gesteuerten Temperaturen parallel zu der Kerntemperatur der Schinken zunehmen.

6. Vorrichtung nach Anspruch 5, dadurch gekennzeichnet, dass das Transportsystem eine Schiene (4) ist, auf der Rollwagen (5) angeordnet sind, an denen die Kochbehälter (6) angehängt sind.

7. Vorrichtung nach Anspruch 5 oder 6, dadurch gekennzeichnet, dass der Tauchbehälter (26) vertikal aufwärts bewegbar ist, um den Behälter (6) in der oberen Position einzutauchen, sowie abwärts, um die Vorwärtsbewegung der Behälter (6) in der unteren Position zu ermöglichen.

8. Vorrichtung nach Anspruch 5 oder 6, dadurch gekennzeichnet, dass der Tauchbehälter (26) stationär ist und die Aufhängung jedes Behälters (6) eine variable steuerbare Länge hat, um in der langen Position den Behälter (6) in den Tauchbehälter (26) abzusenken und in der kurzen Position eine Bewegung des Behälters (6) zu ermöglichen.

9. Vorrichtung nach einem der Ansprüche 5-8, dadurch gekennzeichnet, dass die Behälter (6) perforiert sind.

10. Vorrichtung nach einem der Ansprüche 5-9, dadurch gekennzeichnet, dass jeder Behälter (6) rechteckige Form hat mit Löchern an jeder Oberfläche ausser entweder an der Vorderseite und an der Rückseite.

11. Vorrichtung nach einem der Ansprüche 5-10, dadurch gekennzeichnet, dass die Rohrleitungstore (16 bis 20) vorhangartige Türen sind.

12. Vorrichtung nach einem der Ansprüche 5-11, dadurch gekennzeichnet, dass der Pegel des Fluids in jeder der Wannen (32, 34 bis 36) unterhalb des Bodens der Behälter liegt.

13. Vorrichtung nach einem der Ansprüche 5-12, dadurch gekennzeichnet, dass auf die Kochleitung eine Kühlanlage folgt, die eine Kühlstation (40) hat, sowie ein erstes Abteil (14), das mit einem Tauchbehälter (39) versehen ist, der mit der Kühlstation (40) verbunden ist, und in den jeder Behälter (6), der aus der Kochleitung austritt, eingetaucht wird.

**Claims**

1. A process for cooking food products, such as hams, characterized in that it comprises the following steps:
— a first step lasting approximately 45 minutes, during which a heat transporting liquid is placed in contact with the hams and their trays, the temperature of the heat transporting liquid being of the order of 83°C,
— a second step during which the heat transporting liquid is removed and which lasts until the ambient temperature reaches a predetermined minimum value,
— a third step during which the heat transporting liquid or vapour is placed in contact with the hams and their trays, the ambient temperature being maintained constant at the said predetermined minimum value,
— a fourth step during which the said heat transporting liquid is left in contact with the hams and their trays, the difference between the ambient temperature and the core temperature being maintained constant, equal to a predetermined differential value, and
— a fifth step during which the ambient temperature is maintained constant between 70°C and 75°C, once this temperature has been reached during the fourth step, the fifth step ending when the core temperature has reached the desired value, that is 65°C to 68°C.

2. A process in accordance with claim 1, characterized in that the said heat transporting liquid is water vapour.

3. A process in accordance with claim 1 or 2, characterized in that the said predetermined minimum value is 55°C.

4. A process in accordance with one of claims 1-3, characterized in that the said predetermined differential value is chosen in a range from 5°C to 20°C approximately.

5. An installation to carry out the cooking process in accordance with one of claims 1-4, characterized in that it has a heat transporting liquid heating station (30), a thermally insulated duct (1) which is split into a series of compartments (8 to 13) separated one from another (and for the first and last from outside) by gates (2, 3, 16 and 20), a number of cooking containers (6) that can be loaded with piles of hams and moved by a transport system going through the series of compartments, the first compartment (8) comprising a soaking basin (26), connected to the heating station (30), in which each entering container is soaked, the second compartment (9) being empty of heat transporting liquid and the subsequent compartments (10 to 13) having on their floors (3) vats of liquid (32, 34 to 36) provided with heating means (33), the temperatures controlled by the heating means in the vats of liquid increasing in parallel with the core temperature of the hams.

6. An installation in accordance with claim 5, characterized in that the transport system is a rail (4) on which roll trolleys (5) to which are suspended the cooking containers (6).

7. An installation in accordance with claim 5 or 6, characterized in that the soaking basin (26) is vertically movable up to, submerge the container (6), in the high position and, down to allow the forward motion of the containers (6), in the low position.

8. An installation in accordance with claim 5 or 6, characterized in that the soaking basin (26) is stationary and the suspension of each container (6) is of variable controlled length to, in the long condition, lower the container (6) in the soaking basin (26) and, in the short condition, provide the moving of the container (6).

9. An installation in accordance with one of claims 5-8, characterized in that the containers (6) are perfored.

10. An installation in accordance with one of claims 5-9, characterized in that each container (6) is a parallelipiped with holes on every surface except either the front side or the rear side.

11. An installation in accordance with one of claims 5-10, characterized in that the duct gates (16 to 20) are curtain-type doors.

12. An installation in accordance with one of claims 5-11, characterized in that the level of fluid in any vat (32, 34 to 36) is below the bottom of the container.

13. An installation in accordance with one of claims 5-12, characterized in that the cooking duct (1) is followed by a cooling installation having a cooling station (40) and a first compartment (14) provided with a soaking basin (39), tied to the cooling station (40), into which each container (6) outgoing from the cooking duct is soaked.

FIG.1

FIG.2

FIG.3

FIG.5

FIG.4